# EUROPÄISCHE PATENTSCHRIFT

(11) **EP 3 569 974 B1**
(45) Veröffentlichungstag und Bekanntmachung des Hinweises auf die Patenterteilung: **16.08.2023**
(21) Anmeldenummer: 19173285.8
(22) Anmeldetag: 08.05.2019
(51) Int. Cl.: G01B 5/28, G01B 5/00, G01B 5/20, G01B 21/04

(54) **WERKSTÜCKHALTER, MESSVORRICHTUNG UND MESSVERFAHREN ZUM MESSEN EINES WERKSTÜCKS**
WORKPIECE HOLDER, MEASURING DEVICE AND MEASURING METHOD FOR MEASURING A WORKPIECE
SUPPORT DE PIÈCE, DISPOSITIF DE MESURE ET PROCÉDÉ DE MESURE D'UNE PIÈCE

(30) Priorität: 14.05.2018 DE 102018111368
(43) Veröffentlichungstag der Anmeldung: 20.11.2019
(73) Patentinhaber: CARL MAHR HOLDING GMBH, 37073 Göttingen (DE)
(72) Erfinder: BEINEMANN, MARTIN, 07745 Jena (DE)
(74) Vertreter: Rüger Abel Patentanwälte PartGmbB

(56) Entgegenhaltungen:
- CN-U- 201 535 655
- CN-U- 201 645 182
- CN-U- 206 803 901
- CN-Y- 201 110 754
- DE-A1- 4 345 093
- DE-U1-202014 004 713
- JP-A- 2005 331 497
- US-A- 4 190 621
- US-A- 5 640 778
- US-A1- 2003 214 646
- US-A1- 2012 227 476

## Beschreibung

Die Erfindung betrifft eine Messvorrichtung und ein Messverfahren zum Messen des Werkstücks unter Verwendung eines Werkstückhalters. Der Werkstückhalter dient zum Halten eines Werkstücks, das zwei auf entgegengesetzten Werkstückseiten vorhandene zu messende Werkstückoberflächen aufweist.

Werkstücke, die auf entgegengesetzten Werkstückseiten jeweils eine zu messende Werkstückoberfläche, insbesondere gekrümmte Werkstückoberfläche aufweisen, kommen insbesondere auf dem Gebiet der Optik häufig vor. Die Werkstückoberflächen können jeweils zumindest abschnittsweise sphärisch oder asphärisch sein oder eine Freiform aufweisen. Bei den Werkstücken kann es sich auch um einen Array von Mikrolinsen und/oder von zylindrischen Optiken handeln. Es ist gerade bei optischen Werkstücken erforderlich, die kennzeichnenden Parameter der Werkstückoberflächen zu messen, beispielsweise die Form einer Werkstückoberfläche und/oder die Position und/oder die Ausrichtung einer oder mehrerer optischer Achsen jeder Werkstückoberfläche. Dabei ist es von Bedeutung, den wenigstens einen geometrischen Parameter einer Oberfläche exakt in Bezug auf den wenigstens einen geometrischen Parameter der anderen Oberfläche zu kennen.

Eine Messvorrichtung nach dem Oberbegriff des Patentanspruches 1 ist aus US 2012/227476 A1 bekannt.

Die Messung einer Werkstückoberfläche bzw. optischen Werkstückoberfläche eines Werkstücks ist z.B. aus DE 10 2014 208 636 A1 oder DE 10 2016 110 453 A1 bekannt.

US 4 190 621 A offenbart ein Verfahren zum Gießen von optischen Plastiklinsen und beschreibt einen Halter für eine Gießform. Der Halter hat einen ringförmigen Träger und davon wegragende Sockel. Die Sockel sind in Umfangsrichtung beabstandet angeordnet und weisen abgestufte Auflageflächen für die Gießform auf. Zur Herstellung der Linse wird zunächst eine untere Gießform auf untere Halteflächen der Sockel aufgelegt, anschließend wird flüssiges Harzmaterial eingefüllt und schließlich wird die obere Gießform auf obere Auflageflächen der Sockel aufgelegt, so dass das Harz die Form des Zwischenraums zwischen der unteren Gießform und der oberen Gießform annimmt. In diesem Zustand kann das Harz aushärten.

US 5 640 778 A beschreibt eine Vorrichtung und ein Verfahren zum Messen des Krümmungsradius von sphärischen und zylindrischen Flächen. Die Vorrichtung hat einen ringförmigen Träger und vier in Umfangsrichtung regelmäßig beabstandete Kugelauflagen. Im Zentrum des Rings ist ein axiales Durchgangsloch vorhanden, um eine Tastkugel hindurchzuführen. Ein Werkstück, das auf den Kugelauflagen aufliegt, kann dann axial angetastet werden. Aus der Axialposition des Tastelements kann dann der Krümmungsradius des Werkstücks ermittelt werden.

Im Stand der Technik wird ein hoher Aufwand betrieben, um Linsen beispielsweise in Linsengruppen oder Objektiven derart anzuordnen, um die Abweichungen in der Linsengruppe bzw. dem Objektiv zu minimieren. DE 10 2007 027 200 A1 schlägt eine Projektionsbelichtungsanlage zur Mikrolithographie sowie einen Manipulator vor, der eine Bi-Asphäre derart ausrichtet, dass die Abbildungseigenschaften des optischen Systems optimiert werden. Aus DE 10 2013 004 738 A1 ist ein Verfahren zur zielgerichteten Justierung von optischen Bauelementen zu einer Bezugsachse bekannt.

DE 10 2008 027 831 A1 betrifft die Messung einer Linsenmittendicke. Eine zu prüfende Linse wird auf einem Drehlager mit einer Rotationsachse aufgenommen. Das Drehlager mit der Linse wird um seine Rotationsachse gedreht. Ein Laserstrahl wird parallel zur Rotationsachse durch die drehende Linse gelenkt und ein in einer Ebene ortsauflösender Lichtsensor erfasst den Schlagkreis des Laserstrahls nach dem Durchtritt durch die Linse. Die Linse wird dann relativ zu der Drehlagerachse ausgerichtet, um den Schlagkreis zu minimieren. In dieser Ausrichtung verläuft die Drehachse des Drehlagers durch die Mitte der Linse, die dann durch ein Tasterpaar angetastet werden kann.

Hahne, Langehanenberg, "Automated asphere centration testing with AspheroCheck UP", Proc. of SPIE, Volume 10448, 104481H, 2017, doi:10.1117/12.2279674 beschreibt die optische Messung von geometrischen Parametern einer Linse mit zwei gegenüberliegenden optischen Messeinheiten. Dazu müssen die optischen Messeinheiten beidseitig vom zu messenden Objekt im Bereich einer gemeinsamen Achse angeordnet werden, was den Aufbau und die Anordnung des Werkstücktisches für das zu messende Werkstück beeinträchtigt.

Aus DE 10 2006 052 047 A geht ein Verfahren und eine Vorrichtung zur Bestimmung der Lage einer Symmetrieachse einer asphärischen Linsenfläche hervor. Die weitere, entgegengesetzte Linsenfläche wird nicht gemessen.

DE 10 2014 007 203 A1 beschreibt die Messung von zwei Werkstückoberflächen eines optischen Werkstücks, wobei zunächst die eine Werkstückoberfläche gemessen wird, das Werkstück anschließend manuell um 180 Grad gedreht wird und dann die entgegengesetzte Werkstückoberfläche in einem zweiten Messdurchgang gemessen wird. Dies erfordert eine sehr präzise und wiederholbar genaue Anordnung des Werkstücks in den beiden Ausrichtungen, um die einzelnen Messungen der Werkstückoberflächen in Bezug zueinander setzen zu können, insbesondere die Relativlage bzw. Relativausrichtung von optischen Achsen der beiden Werkstückoberflächen.

JP 2005-331497 A beschreibt ein Verfahren und eine Vorrichtung zur Prüfung von asphärischen Linsen, wobei die dreidimensionale räumliche Relativlage zwischen den beiden Linsenseiten geprüft wird. Über zwei separate sphärische Tastelemente kann die Linse auf beiden Seiten taktil gemessen werden. Der Halter für die Linse ist hohlzylindrisch, so dass eine Linsenfläche an einer Kante des hohlzylindrischen Halters aufliegt. Der durch den Halter gedeckte Bereich kann nur gemessen werden, wenn die Linse umgedreht wird.

Aus CN 201645182 U ist ein Werkstückhalter bekannt, der drei radial zu einer Achse verschiebbare Spannbacken aufweist. Zwischen den Spannbacken kann ein Werkstück klemmend gehalten werden.

Ausgehend vom Stand der Technik kann es als Aufgabe der vorliegenden Erfindung angesehen werden, das Messen eines Werkstücks, insbesondere eines optischen Werkstücks mit zwei entgegengesetzten zu vermessenden Werkstückoberflächen zu vereinfachen.

Diese Aufgabe wird durch eine Messvorrichtung mit den Merkmalen des Patentanspruches 1 sowie ein Messverfahren mit den Merkmalen des Patentanspruches 13 gelöst.

Ein nachfolgend beschriebener Werkstückhalter wird in einer erfindungsgemäßen Messvorrichtung und einem erfindungsgemäßen Messverfahren verwendet. Der Werkstückhalter ist dazu eingerichtet, ein Werkstück mit zwei auf entgegengesetzten Werkstückseiten vorhandenen zu messenden Werkstückoberflächen während einer Messung mit einer entlang einer Werkstückoberfläche bewegbaren Tasteinheit zu halten. Bei dem Werkstück handelt es sich insbesondere um ein optisches Werkstück mit zwei zu messenden optischen Werkstückoberflächen, beispielsweise eine Linse. Jede zu messende Werkstückoberfläche kann einen oder mehrere sphärische oder asphärische Oberflächenabschnitte haben oder eine Freiform aufweisen insgesamt sphärisch oder asphärisch sein. Jede Werkstückoberfläche kann konkave und/oder konvexe Oberflächenabschnitte aufweisen. Insbesondere ermöglicht der Werkstückhalter den Zugang zu beiden Werkstückoberflächen und die Messung beider Werkstückoberflächen in einer einzigen Aufspannung. Die Tasteinheit kann beispielsweise einen Tastarm mit einem berührenden, taktilen Tastelement oder einem berührungslos arbeitenden Tastelement aufweisen.

Der Werkstückhalter hat einen Träger, der dazu eingerichtet ist, mit einer Spanneinrichtung einer Messvorrichtung verbunden zu werden. An dem Träger kann beispielsweise ein zylindrischer Spannzapfen zum Einspannen in eine Spanneinrichtung vorhanden sein.

Der Werkstückhalter hat außerdem einen Haltekörper, der mit einem Befestigungsende am Träger befestigt ist und sich ausgehend vom Träger zu einem freien Halteende erstreckt. Entlang einer Längsachse des Werkstückhalters ist das Halteende mit Abstand vom Träger angeordnet.

Am Halteende ist wenigstens eine Haltefläche vorhanden. Die Haltefläche ist dazu eingerichtet, mit einem Randbereich des Werkstücks zur Anlage gebracht zu werden und das Werkstück an der Werkstückhalterung zu halten. Das Werkstück kann lose, nur durch die eigene Gewichtskraft an der wenigstens einen Haltefläche anliegen und durch die wenigstens eine Haltefläche positioniert werden. Alternativ dazu ist es auch möglich, zwischen dem Randbereich des Werkstücks und dem Halteende durch eine Klemmbeaufschlagung eine reibschlüssige bzw. kraftschlüssige Verbindung herzustellen.

Der Haltekörper hat einen Freiraum. Die Längsachse des Werkstückhalters erstreckt sich durch den Freiraum hindurch. Ausgehend von der Längsachse weist der Freiraum wenigstens einen Querkanal auf, der sich rechtwinkelig oder schräg zur Längsachse erstreckt und an einer Umfangsöffnung des Haltekörpers mündet und dort von außen zugänglich ist. Durch diese Zugänglichkeit kann die dem Träger zugeordnete Werkstückoberfläche durch die bewegbare Tasteinheit gemessen werden. Die entgegengesetzte Werkstückoberfläche weist vom Träger und vom Haltekörper weg und ist ebenfalls durch die Tasteinheit zugänglich. Somit können beide Werkstückoberflächen in der gleichen Einspannung gemessen werden. Die Messung ist genau, schnell und einfach durchführbar, entweder manuell oder automatisiert. Es besteht außerdem die Möglichkeit, sehr einfach und schnell einen räumlichen Bezug zwischen den geometrischen Parametern der beiden Werkstückoberflächen herzustellen.

Bei einer bevorzugten Ausführung ist der wenigstens eine Querkanal auf der dem Träger entgegengesetzten Seite axial offen. Er durchsetzt den Haltekörper am Halteende in Richtung parallel zur Längsachse vollständig.

Bei einer bevorzugten Ausführungsform hat der Freiraum mehrere Querkanäle, die im Bereich der Längsachse ineinander münden. Die Umfangsöffnungen der Querkanäle sind in einer Umfangsrichtung um die Längsachse des Werkstückhalters mit Abstand zueinander angeordnet.

Sind mehrere Querkanäle vorhanden, ist es vorteilhaft, wenn sich zwei Querkanäle im Wesentlichen entlang einer gemeinsamen Achse rechtwinklig zur Längsachse des Werkstückhalters erstecken. Dadurch kann der Zugang der Tasteinrichtung zur Werkstückoberfläche entlang des gesamten Durchmessers des Werkstücks ermöglicht werden. Zumindest ist der Freiraum mit dem wenigstens einen Querkanal derart ausgestaltet, dass die Tasteinheit auf der dem Träger zugewandten Werkstückoberfläche das Werkstück entlang einer Linie auf der Werkstückoberfläche messen kann, die größer ist als der Radius der Werkstückoberfläche.

Vorzugsweise ist der Freiraum relativ zur Tasteinheit ausreichend groß dimensioniert, dass die Tasteinheit im Freiraum rechtwinkelig zur Bewegungsrichtung beim Messen verschiebbar ist, insbesondere um den jeweiligen Scheitelpunkt (Maximum oder Minimum) einer konvexen oder konkaven Flächenabschnitts auf der Werkstückoberfläche für die Messung zu ermitteln und die Tasteinheit in der Ebene des Scheitelpunkts zu positionieren und während der Messung zu bewegen.

Mehrere vorhandene Querkanäle können den Haltekörper in mehrere in Umfangsrichtung mit Abstand angeordnete Haltekörperteile trennen. Die Haltekörperteile können am Träger derart gelagert sein, dass sie am Halteende federelastisch relativ zur Längsachse bewegbar sind.

In einer Ansicht entlang der Längsachse können die Querkanäle sternförmig angeordnet sein. In Umfangsrichtung U um die Längsachse können die Querkanäle gleichmäßig verteilt angeordnet sein, so dass der Winkel zwischen zwei unmittelbar benachbarten Querkanälen jeweils gleich groß ist.

Bei einer bevorzugten Ausführungsform hat der Freiraum im Bereich der Längsachse einen zylindrischen oder prismatischen Zentralbereich. Der Zentralbereich kann symmetrisch zur Längsachse angeordnet sein. Der wenigstens eine Querkanal mündet in den Zentralbereich ein.

Es ist außerdem vorteilhaft, wenn jeder Querkanal einen Hauptabschnitt und einen in Umfangsrichtung verglichen mit dem Hauptabschnitt schmaleren Schlitzabschnitt aufweist. Der Schlitzabschnitt schließt sich in Richtung der Längsachse an den Hauptabschnitt an. Insbesondere kann der Schlitzabschnitt am Halteende des Haltekörpers angeordnet sein. Der Hauptabschnitt jedes Querkanals kann in Richtung parallel zur Längsachse betrachtet an den Träger angrenzen.

Zum Halten des Werkstücks kann der Haltekörper am Halteende eine axiale Haltefläche aufweisen, die vom Träger abgewandt ist. Der Normalenvektor der axialen Haltefläche hat zumindest eine axiale Komponente, die vom Träger weg weist und ist vorzugsweise parallel zur Längsachse ausgerichtet. Ist der Haltekörper in mehrere Haltekörperteile unterteilt, ist an jedem Haltekörperteil ein axialer Halteflächenabschnitt der axialen Haltefläche vorhanden.

Es ist außerdem vorteilhaft, wenn der Haltekörper am Halteende eine periphere Haltefläche aufweist, die sich in einer Umfangsrichtung um die Längsachse erstreckt. Die periphere Haltefläche kann der Längsachse des Werkstückhalters zugewandt sein. Bei einer Ausführungsform kann ein Normalenvektor auf der peripheren Haltefläche radial zur Längsachse ausgerichtet sein oder zumindest eine Komponente aufweisen, die radial zur Längsachse ausgerichtet ist.

Ist der Haltekörper in mehrere Haltekörperteile unterteilt, weist jedes Haltekörperteil eine peripheren Halteflächenabschnitt der Haltefläche auf.

Somit können die axiale Haltefläche und die periphere Haltefläche bzw. jeweils ein axialer Halteflächenabschnitt und ein peripherer Halteflächenabschnitt an einem gemeinsamen Haltekörperteil einen Winkel kleiner als 180 Grad oder kleiner als 120 Grad einschließen und insbesondere im Wesentlichen rechtwinklig zueinander ausgerichtet sein und das Werkstück am Randbereich an dessen Außenkante sowie an einer axialen Seite abstützen. Es ist insbesondere vorteilhaft, wenn das Werkstück am Halteende nicht an entgegengesetzten axialen Seiten übergriffen wird. Dadurch ist ein einfaches Einsetzen des Werkstücks in den Werkstückhalter möglich.

Vorzugsweise wird ein Werkstück durch die peripheren Halteflächenabschnitte mehrerer Haltekörperteile kraftschlüssig an mehreren voneinander beabstandeten Umfangsstellen radial zur Längsachse positioniert und optional geklemmt.

Die Messvorrichtung hat eine in eine Bewegungsrichtung bewegbare Tasteinheit sowie eine Spanneinrichtung, die zum Einspannen des Trägers des Werkstückhalters eingerichtet ist. Die Längsachse des Werkstückhalters ist im eingespannten Zustand vorzugsweise rechtwinklig zur Bewegungsrichtung der Tasteinheit ausgerichtet. Durch den Freiraum des Werkstückhalters kann die Tasteinheit das Werkstück in einer Aufspannung an beiden entgegengesetzten axialen Seiten und mithin die beiden entgegengesetzten Werkstückoberflächen messen, um die zu messenden geometrischen Parameter zu erfassen. Ein Umspannen des Werkstücks erfolgt nicht. Dadurch ist es auch möglich, die Relativlage der beiden Werkstückoberflächen relativ zueinander sehr einfach und genau zu ermitteln.

Es ist vorteilhaft, wenn die Tasteinheit zur Bestimmung eines Scheitelpunkts der Werkstückoberfläche rechtwinkelig zur Bewegungsrichtung und rechtwinkelig zur Längsachse des Werkstückhalters bewegbar bzw. positionierbar ist, um die Messung in der Messebene am Werkstück durchzuführen, in der der Scheitelpunkt liegt. Die Ermittlung des Scheitelpunktes kann automatisch oder manuelle erfolgen.

Die Tasteinheit der Messvorrichtung weist einen Tastarm auf. Der Tastarm hat ein freies Tastende mit einem rechtwinklig zur Tastarmlängsachse ausgerichteten ersten Tastelement und einem entgegengesetzt zum ersten Tastelement ausgerichteten zweiten Tastelement. Das erste und das zweite Tastelement können taktil oder berührungslos arbeiten. Als taktiles Tastelement wird insbesondere eine Kugel verwendet.

Vorzugsweise ist die Tastkraft, mit der ein taktiles Tastelement beim Messen gegen die Werkstückoberfläche des zu messenden Werkstücks gedrückt wird, sehr klein und insbesondere kleiner als 5mN. Die Tastkraft beträgt bei einem Ausführungsbeispiel mindestens 0,5 mN.

Der Tastarm kann mit Abstand zum Tastende um eine Schwenkachse schwenkbar gelagert sein. Die Schwenkachse ist vorzugsweise rechtwinklig zur Längsachse des Werkstückträgers und rechtwinklig zur Bewegungsrichtung der Tasteinheit ausgerichtet.

Ein erfindungsgemäßes Messverfahren weist folgende Schritte auf:

Zunächst wird das Werkstück am Halteende des Werkstückhalters angeordnet. Anschließend werden die beiden Werkstückoberflächen ohne Umspannen des Werkstücks nacheinander gemessen, wobei die Reihenfolge der Messung der beiden Werkstückoberflächen beliebig ist. Es wird die vom Träger abgewandte erste Werkstückoberfläche durch Bewegen der Tasteinheit entlang der ersten Werkstückoberfläche gemessen. Die zweite Werkstückoberfläche, die dem Träger zugewandt ist, wird durch Bewegen der Tasteinheit entlang der zweiten Werkstückoberfläche gemessen, wobei die Tasteinheit in den Freiraum des Werkstückhalters eingreift und dadurch der Zugang zur zweiten Werkstückoberfläche ermöglicht ist.

Vor dem Messen kann eine rechnerische und/oder messtechnische Bestimmung eines Scheitelpunkts (lokales oder globales Maximum oder Minimum) auf jeder Werkstückoberfläche erfolgen, so dass die anschließende Messung jeweils in einer Messebene erfolgt, in der der Scheitelpunkt liegt. Die beiden Messebenen können identisch oder parallel versetzt zueinander sein.

Mit Hilfe des Werkstückhalters ist sowohl ein manuelles, als auch ein automatisiertes Messen eines Werkstücks, insbesondere eines optischen Werkstücks auf einfache Weise möglich.

Nachfolgend werden bevorzugte Ausführungsbeispiele der Erfindung anhand der beigefügten Zeichnungen im Einzelnen erläutert. Es zeigen:
Figur 1 ein Ausführungsbeispiel einer Messvorrichtung,
Figur 2 eine schematische, blockschaltbildähnliche Darstellung der Anordnung eines zu messenden Werkstücks in einer Werkstückhalterung beim Messen der Werkstückoberflächen mit einer taktil messenden Tasteinheit,
Figur 3 eine schematische Prinzipdarstellung eines alternativen Ausführungsbeispiels einer Tasteinheit mit berührungslos messenden Tastelementen,
Figur 4 eine Draufsicht auf ein Ausführungsbeispiel einer Werkstückhalterung entlang der Längsachse,
Figur 5 eine perspektivische Darstellung eines Ausführungsbeispiels einer Werkstückhalterung,
Figur 6 eine Seitenansicht der Werkstückhalterung aus Figur 5,
Figur 7 einen Längsschnitt durch die Werkstückhalterung aus den Figuren 5 und 6 gemäß der Schnittlinie VII-VII in Figur 6,
Figur 8 eine Draufsicht auf die Werkstückhalterung gemäß der Figuren 5-7,
Figur 9 einen Längsschnitt durch die Werkstückhalterung gemäß der Figuren 5-8 gemäß Schnittlinie IX-IX in Figur 8,
Figur 10 eine schematische, beispielhafte Messung zweiter entgegengesetzter Werkstückoberflächen eines Werkstücks und
Figuren 11-14 jeweils eine schematische Prinzipdarstellung unterschiedlicher optischer Werkstücke, die mit Hilfe der Werkstückhalterung gemessen werden können.

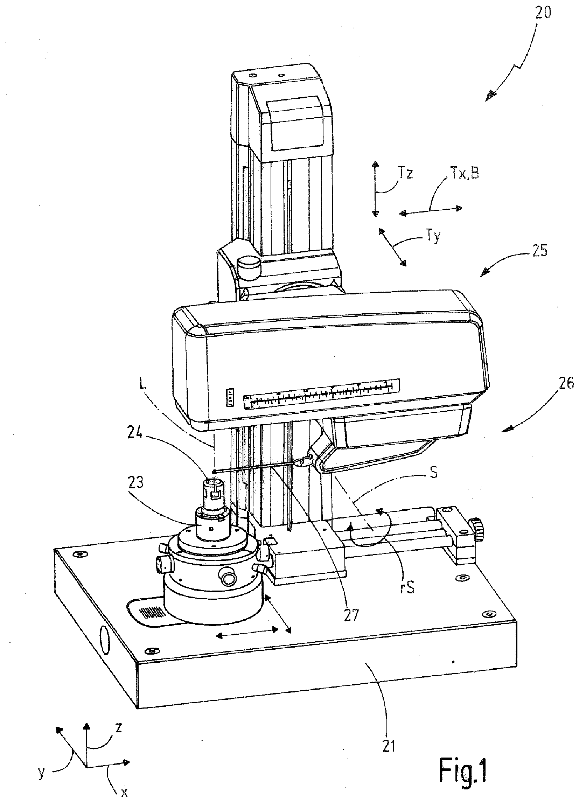

In Figur 1 ist ein Ausführungsbeispiel einer Messvorrichtung 20 veranschaulicht. Die Messvorrichtung 20 hat eine Maschinenbasis 21. Ein kartesisches Koordinatensystem ist ortsfest zur Maschinenbasis 21 angeordnet und definiert eine x-Richtung x, eine y-Richtung y und eine z-Richtung z.

An der Maschinenbasis 21 ist eine Spanneinrichtung 23 zum Aufspannen eines zu messenden Werkstücks 24 angeordnet. Die Spanneinrichtung 23 ist in x-Richtung und/oder y-Richtung manuelle positionierbar. Sie weist eine Drehantrieb mit einer Drehachse auf, mittels dem ein durch die Spanneinrichtung 23 mittelbar aufgespanntes Werkstück 24 um seine Längsachse L gedreht werden kann. Die Drehachse der Spanneinrichtung 23 kann gegenüber der z-Richtung des Koordinatensystems x, y, z positioniert und ausgerichtet werden, beispielsgemäß manuell. Hierfür könnte alternativ auch eine ansteuerbare Achsanordnung mit entsprechenden translatorischen und/oder rotatorischen Freiheitsgraden vorhanden sein.

Die Messvorrichtung 20 hat außerdem eine Maschinenachsanordnung 25 zur Positionierung und/oder Ausrichtung einer Tasteinheit 26. Die Maschinenachsanordnung 25 hat einen translatorischen Freiheitsgrad Tz parallel zur z-Richtung, einen translatorischen Freiheitsgrad Ty parallel zur y-Richtung, einen translatorischen Freiheitsgrad Tx parallel zur x-Richtung, wobei dieser translatorische Freiheitsgrad eine Bewegungsrichtung B der Tasteinheit 26 während der Messung eines Werkstücks 24 definiert.

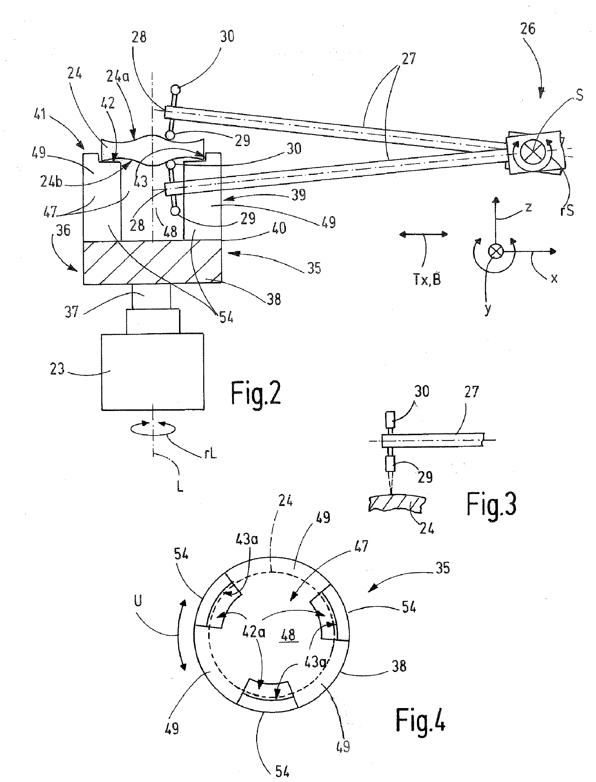

Wie es insbesondere in Figur 2 zu erkennen ist, weist die Tasteinheit 26 beim Ausführungsbeispiel einen um eine Schwenkachse S schwenkbar gelagerten Tastarm 27 auf, wodurch ein weiterer rotatorischer Freiheitsgrad rS um die Schwenkachse S gebildet ist. Die Schwenkachse S erstreckt sich rechtwinklig zur Bewegungsrichtung B, in der der Tastarm 27 während der Messung bewegt wird. Die Schwenkachse S ist beim Ausführungsbeispiel parallel zur y-Richtung ausgerichtet und die Bewegungsrichtung B ist parallel zur x-Richtung ausgerichtet. Die Tasteinheit 26 kann vor der Messung mittels der Maschinenachsanordnung 25 auch in y-Richtung bewegt werden, um die Messebene oder die Messebenen (x-z-Ebene) der Tasteinheit 26 bzw. des Tastarms 27 einzustellen, in der gemessen wird.

Die Maschinenachsanordnung 25 und die Freiheitsgrade zur Positionierung und Ausrichtung der Spanneinrichtung 23 sind nur beispielhaft. Die Anzahl der translatorischen und/oder rotatorischen Freiheitsgrade kann jeweils abhängig von der Messaufgabe, für die die Messvorrichtung 20 eingerichtet und vorgesehen ist, geeignet festgelegt werden.

Der Tastarm 27 hat mit Abstand zur Schwenkachse S ein freies Tastende 28, an dem wenigstens ein Tastelement und beim Ausführungsbeispiel ein erstes Tastelement 29 sowie ein zweites Tastelement 30 angeordnet sind. Die Tastelemente 29, 30 sind bei dem in Figur 2 veranschaulichten Ausführungsbeispiel als taktile Tastelemente 29, 30 ausgestaltet und liegen während der Messung am zu messenden Werkstück 24 an. Die Tastelemente 29, 30 sind auf bezüglich der Tastarmlängsachse gesehen diametral entgegengesetzten Seiten des Tastarms 27 angeordnet. Die Tastelemente 29, 30 ragen sozusagen in entgegengesetzte Richtungen vom Tastarm 27 weg. Beim Ausführungsbeispiel weisen die Tastelemente 29, 30 jeweils eine Tastkugel auf, die bei der Messung am Werkstück 24 anliegt.

Wie es schematisch in Figur 3 veranschaulicht ist, können das erste und/oder das zweite Tastelement 29, 30 auch aus berührungslos messende Tastelemente ausgebildet sein, die beispielsweise mit Abstand zu einer Werkstückoberfläche 24a, 24b des Werkstücks 24 bewegt werden und ein Messsignal erzeugen, um den Abstand der Tastelemente 29, 30 zur Werkstückoberfläche 24a, 24b bestimmen zu können. Beispielsweise können die Tastelemente 29, 30 zur berührungslosen Messung Licht, insbesondere Laserlicht, abstrahlen und empfangen und den Abstand des betreffenden Tastelements 29, 30 zur Werkstückoberfläche des Werkstücks 24 auswerten.

Zur Messung wird der Tastarm 27 in die Bewegungsrichtung B bewegt und dabei die Position in Bewegungsrichtung sowie die Schwenklage um die Schwenkachse S gemessen. Die Schwenklage ist charakteristisch für einen vom Tastelement 29 angetasteten Punkt auf der Werkstückoberfläche des Werkstücks 24. Dadurch, dass sich das Tastelement 29, 30 beim Schwenken nicht gerade rechtwinkelig zur Bewegungsrichtung B bewegt, sondern gleichzeitig auch parallel zur Bewegungsrichtung B bewegt wird, entsteht ein Fehler, der als Cosinus-Fehler bezeichnet wird. Dieser Fehler kann rechnerisch in einer Steuer- und Auswerteeinheit der Messvorrichtung eliminiert werden.

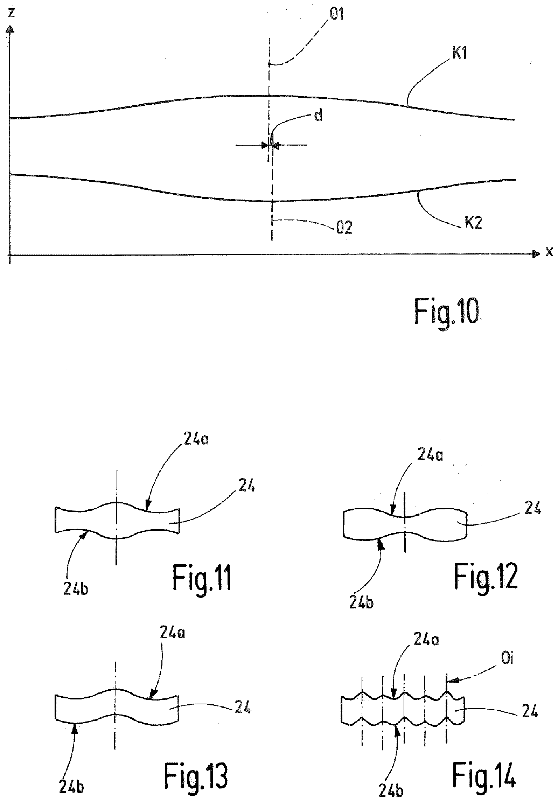

Bei dem hier zu messenden Werkstück 24 handelt es sich um ein Werkstück 24, das eine zu messende erste Werkstückoberfläche 24a auf einer Werkstückseite und eine zu messende zweite Werkstückoberfläche 24b auf der entgegengesetzten anderen Werkstückseite aufweist. Beide Werkstückoberflächen 24a, 24b sind zumindest abschnittsweise konkav und/oder konvex gekrümmt und können in den konkaven und/oder konvexen Abschnitten konstante oder sich ändernde Krümmungsradien aufweisen. Bei dem Werkstück 24 handelt es sich insbesondere um ein optisches Werkstück mit zwei optischen Werkstückoberflächen 24a, 24b, beispielsweise um eine Linse. Die optische Werkstückoberfläche 24a, 24b kann beispielsweise sphärisch oder asphärisch sein oder eine Freiform aufweisen oder ein Linsenarray mit einer Mehrzahl von Mikrolinsen und optischen Achsen Oi (i=1...n) sein. Unterschiedliche Beispiele für Anordnungen und Verläufe der Werkstückoberflächen 24a, 24b sind in den Figuren 11-14 schematisch veranschaulicht.

Bei solchen Werkstücken 24 ist es von Bedeutung, einen oder mehrere geometrische Parameter jeder Werkstückoberfläche 24a, 24b zu erfassen und außerdem die Relativlage bzw. Relativausrichtung der den Werkstückoberflächen 24a, 24b zugeordneten optischen Achsen O1, O2 zu bestimmen. Die Anzahl der optischen Achsen hängt von der Ausgestaltung des Werkstücks ab und kann zwei oder mehr als zwei sein.

Vor der eigentlichen Messung wird, bei der die Tasteinheit 26 in einer Messebene (x-z-Ebene) in Bewegungsrichtung B entlang der jeweiligen Werkstückoberfläche 24a, 24b bewegt wird, zunächst für die zu messende Werkstückoberfläche 24a, 24b der Scheitelpunkt ermittelt, der den Durchstoßpunkt der optischen Achse O1, O2 durch die Werkstückoberfläche 24a, 24b kennzeichnet. Dies kann manuell oder automatisiert erfolgen. Beispielsweise können zunächst zwei in y-Richtung, also in Richtung der Schwenkachse S versetzt zueinander angeordnete Kurven in jeweils einer x-z-Ebene aufgenommen und anhand der bekannten Sollgeometrie die y-Position der Messebene (x-z-Ebene) rechnerisch ermittelt werden. In x-Richtung muss die Position des Scheitelpunktes nicht genau bekannt sein, da während der Messung ohnehin entlang der gesamten Werkstückoberfläche 24a, 24b in x-Richtung Messwerte aufgenommen werden.

Nach dem Bestimmen der y-Position des Scheitelpunkts, der die Position der Messebene definiert, wird die jeweilige Werkstückoberfläche 24a bzw. 24b gemessen. Die Vorgehensweise der Bestimmung der y-Position des Scheitelpunkts bzw. der Messebene wird vor der Messung für die jeweilige Werkstückoberfläche 24a bzw. 24b durchgeführt. Damit wird sichergestellt, dass die Messung an den beiden Werkstückoberflächen jeweils durch den Scheitelpunkt verläuft.

In Figur 10 ist beispielsweise eine erste Kurve K1 dargestellt, die den Verlauf der ersten Werkstückoberfläche 24a in einer x-z-Ebene mit dem Scheitelpunkt (Maximum) der konvexen Form beschreibt. Eine zweite Kurve K2 beschreibt den Verlauf mit dem Scheitelpunkt (Maximum) der konvexen Form der entgegengesetzten zweiten Werkstückoberfläche 24b ebenfalls in einer x-z-Ebene. Anhand der Kurven K1, K2 kann jeweils eine erste optische Achse O1 des Werkstücks 24 an der ersten Werkstückoberfläche 24a und eine zweite optische Achse O2 des Werkstücks 24 an der zweiten Werkstückoberfläche 24b ermittelt werden. Die Richtung jeder optischen Achse O1, O2 kann rechnerisch anhand einer mathematischen Beziehung, insbesondere Polynom, ermittelt werden, die die Sollgeometrie der jeweiligen Werkstückoberfläche 24a, 24b beschreibt. Dadurch lässt sich beispielsweise ein Versatz d in x- und/oder in y-Richtung und/oder eine Kippung zwischen den beiden optischen Achsen O1, O2 ermitteln.

Für die Bestimmung der Scheitelpunkte und die Messung der beiden Werkstückoberflächen wird das Werkstück nicht umgespannt. Die Messung bzw. Ermittlung der jeweiligen optischen Achse O1, O2 ist daher sehr schnell und einfach möglich.

Die Messung erfolgt derart, dass die Tasteinheit 26 und beispielsweise der Tastarm 27 nacheinander einmal entlang der ersten Werkstückoberfläche 24a und einmal entlang der zweiten Werkstückoberfläche 24b bewegt wird, wobei die Reihenfolge, welche Werkstückoberfläche 24a, 24b zuerst gemessen wird, keine Rolle spielt. Während dieser Messungen wird das Werkstück 24 in seiner Position oder Ausrichtung nicht verändert. Dabei wird jeweils eine linienhafte Messung entlang der beiden Werkstückoberflächen 24a, 24b vorgenommen. Während diesen Messungen werden für jede Werkstückoberfläche 24a, 24b jeweils eine Kurve K1 bzw. K2 aufgenommen, wie sie beispielhaft in Figur 10 veranschaulicht sind. Diese Messung der beiden Werkstückoberflächen 24a, 24b kann in mehreren Drehlagen des Werkstücks 24 um die Längsachse L erfolgen. Nach einer ersten Messung der Kurven K1, K2 in einer ersten Drehlage um die Längsachse L, kann die Spanneinrichtung 23 der Messvorrichtung 20 das Werkstück 24 um die Längsachse L, die einer Rotationsachse der Spanneinrichtung 23 entspricht, um einen gewünschten Drehwinkel drehen. In dieser weiteren Drehlage können dann wieder die erste und die zweite Kurve K1, K2 gemessen werden.

Um die beiden Werkstückoberflächen 24a, 24b eines Werkstücks 24 in einer Aufspannung messen zu können, ist erfindungsgemäß ein Werkstückhalter 35 vorhanden. Der Werkstückhalter 35 ist dazu eingerichtet, die Zugänglichkeit zu den beiden Werkstückoberflächen 24a, 24b ohne Umspannen des Werkstücks 24 bereitzustellen, so dass die beiden Werkstückoberflächen 24a, 24b durch die Tasteinheit 26 und beispielsgemäß die Tastelemente 29, 30 des Tastarms 27 erreichbar sind.

Der Werkstückhalter 35 ist in Figur 2 stark schematisiert veranschaulicht. Der Werkstückhalter 35 hat einen Träger 36, der dazu eingerichtet ist, den Werkstückhalter 35 in der Spanneinrichtung 23 einzuspannen. Dazu weist der Träger 36 beim Ausführungsbeispiel einen sich entlang der Längsachse L des Werkstückträgers 35 erstreckenden Einspanndorn 37 auf, der beispielsgemäß eine kreiszylindrische Form hat. An einem Ende des Einspanndorns 37 hat der Träger 36 eine kreisförmige Trägerplatte 38, deren Durchmesser größer ist als der Durchmesser des Einspanndorns 37. Die Trägerplatte 38 ist koaxial zur Längsachse L angeordnet.

An dem Träger 36 und beispielsgemäß der Trägerplatte 38 ist ein Haltekörper 39 angeordnet. Der Haltekörper 39 hat ein Befestigungsende 40, das mit dem Träger 36 und beispielsgemäß der Trägerplatte 38 verbunden ist.

Bei einem bevorzugten Ausführungsbeispiel sind der Haltekörper 39 und der Träger 36 einstückig ohne Naht- und Fügestelle ausgebildet und können aus einem Kunststoff oder einem metallischen Material hergestellt sein.

Von dem Befestigungsende 40 erstreckt sich der Haltekörper 39 vom Träger 36 weg zu einem freien Halteende 41 hin. Das Halteende 41 des Haltekörpers 39 ist dazu eingerichtet, das Werkstück 24 zu positionieren und abzustützen. Hierzu ist am Halteende 41 wenigstens eine Haltefläche und beim Ausführungsbeispiel eine axiale Haltefläche 42 sowie eine periphere Haltefläche 43 vorhanden. Die axiale Haltefläche 42 ist vom Träger 36 abgewandt und weist beispielsgemäß einen Normalenvektor auf, der im Wesentlichen parallel zur Längsachse L ausgerichtet ist. Die periphere Haltefläche 43 ist der Längsachse L zugewandt und kann rechtwinklig zur axialen Haltefläche 42 ausgerichtet sein. Ein Normalenvektor der peripheren Haltefläche 43 ist beispielsgemäß radial zur Längsachse L ausgerichtet.

In dem Haltekörper 39 ist ein Freiraum 47 vorhanden. Der Freiraum 47 hat beim Ausführungsbeispiel einen Zentralbereich 48 mit einem oder mehreren zylindrischen oder prismatischen Abschnitten. Der Zentralbereich 48 ist bevorzugt symmetrisch zur Längsachse L ausgeführt. Die Längsachse L erstreckt sich jedenfalls durch den Zentralbereich 48 hindurch. Der Zentralbereich 48 ist auf der dem Träger 36 abgewandten Seite axial offen und daher im Bereich der Längsachse L vom Halteende 41 her zugänglich.

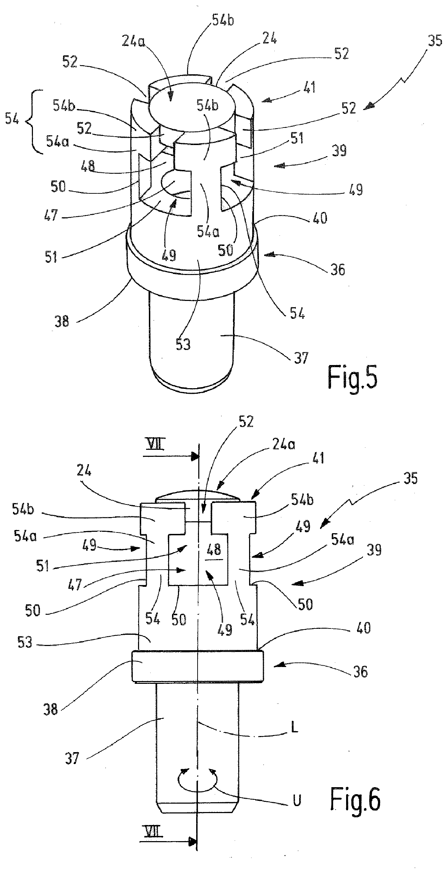

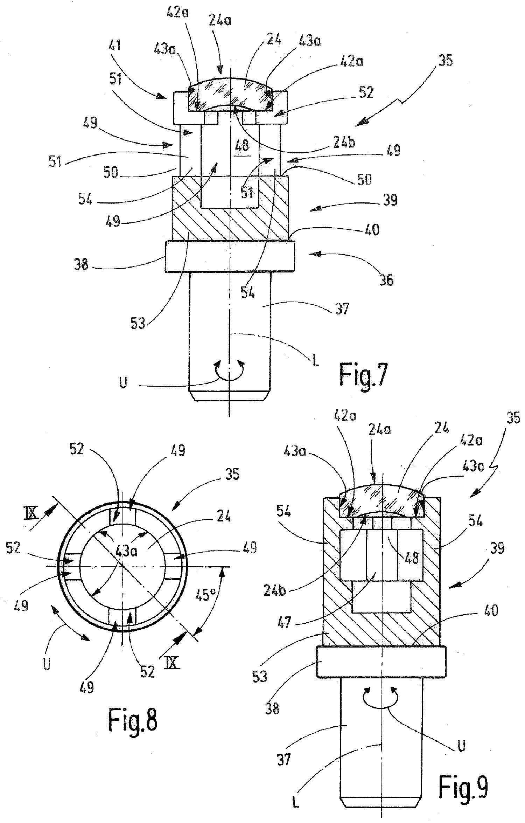

Der Freiraum 47 hat außerdem wenigstens einen Querkanal 49 und beim Ausführungsbeispiel mehrere Querkanäle 49, beispielsweise drei Querkanäle 49 (Figur 4) oder vier Querkanäle 49 (Figuren 5-9). Jeder Querkanal erstreckt sich ausgehend vom Zentralbereich 48 radial zur Längsachse L bis zu einer Umfangsöffnung 50. An der Umfangsöffnung 50 mündet der betreffende Querkanal 49 außen am Haltekörper 39 aus und ist durch die Umfangsöffnung 50 von außen radial zur Längsachse L zugänglich. Durch die Umfangsöffnung 50 und über den Querkanal 49 kann die Tasteinheit, insbesondere ein Tastarm 27 mit wenigstens einem Tastelement 29, 30 im Freiraum 47 angeordnet und dort bewegt werden. Dadurch ist ein Messen der dem Träger 36 zugewandten Werkstückoberfläche, beispielsgemäß der zweiten Werkstückoberfläche 24b, in derselben Aufspannung möglich, in der auch die entgegengesetzte Werkstückoberfläche 24a durch die Tasteinheit 26 gemessen werden kann.

Mit Blick entlang der Längsachse L sind die Querkanäle 49 sternförmig angeordnet. Sie sind beispielsgemäß gleichmäßig in Umfangsrichtung U um die Längsachse L verteilt. Die Umfangsöffnungen 50 der Querkanäle 49 sind in Umfangsrichtung U um die Längsachse L mit Abstand zueinander und beispielsgemäß gleichmäßig beabstandet zueinander angeordnet.

Die Anzahl der Querkanäle 49 kann variieren. Es ist vorteilhaft, wenn zumindest zwei Querkanäle 49 entlang einer gemeinsamen Radialachse sozusagen fluchtend rechtwinklig zur Längsachse L angeordnet sind. Dadurch kann eine Tasteinheit 26 entlang der fluchtenden Querkanäle 49 an oder entlang des gesamten Durchmessers der zweiten Werkstückoberfläche 24b bewegt werden. Beim Ausführungsbeispiel gemäß den Figuren 5-9 fluchten jeweils zwei sich bezüglich der Längsachse L diametral gegenüberliegende Querkanäle 49 miteinander.

Jeder Querkanal 49 hat bei dem hier veranschaulichten Ausführungsbeispiel einen Hauptabschnitt 51 und einen sich daran anschließenden Schlitzabschnitt 52. Der Hauptabschnitt 51 und der Schlitzabschnitt 52 sind in Axialrichtung parallel zur Längsachse L aneinander anschließend angeordnet. Der Schlitzabschnitt 52 ist am Halteende 51 des Haltekörpers 39 vorhanden, während der Hauptabschnitt 50 zwischen dem Schlitzabschnitt 52 und dem Träger 36 bzw. zwischen dem Halteende 41 und dem Träger 36 angeordnet ist. Der Hauptabschnitt 51 kann mit Abstand zum Träger 36 angeordnet sein oder unmittelbar an den Träger 36 angrenzen. Beim Ausführungsbeispiel gemäß der Figuren 5-9 endet der Hauptabschnitt 51 jedes Querkanals 49 parallel zur Längsachse L betrachtet mit Abstand zum Träger 36, so dass ein ringförmig geschlossener Ringteil 53 des Haltekörpers vorhanden ist, der frei ist von Umfangsöffnungen 50 und eine geschlossene Umfangsfläche aufweist.

Die Querkanäle 49 sind auf der dem Träger 36 bzw. dem Ringteil 53 abgewandten Axialseite des Werkstückhalters 35 offen und durchsetzen den Haltekörper 39 auf der dem Träger 36 abgewandten Seite vollständig. Dadurch werden an dem Haltekörper 39 separate, durch die Querkanäle 49 getrennte Haltekörperteile 54 gebildet. Bei dem hier beschriebenen bevorzugten Ausführungsbeispiel, das in den Figuren 5-9 veranschaulicht ist, hat der Hauptabschnitt 51 jedes Querkanals 49 in Umfangsrichtung U eine größere Breite als der Schlitzabschnitt 52. Radial zur Längsachse L gesehen erhält dadurch jedes Haltekörperteil 54 eine T-förmige Gestalt mit einem sich parallel zur Längsachse erstreckenden Längssteg 54a und einem sich in Umfangsrichtung U erstreckenden Quersteg 54b am Halteende 41 des Haltekörpers 39. An jedem Quersteg 54b ist jeweils ein axialer Halteflächenabschnitt 42a der axialen Haltefläche 42 und ein peripherer Halteflächenabschnitt 43a der peripheren Haltefläche 43 vorhanden. Sämtliche axialen Halteflächenabschnitte 42a sind in einer gemeinsamen Ebene rechtwinklig zur Längsachse L ausgerichtet. Sämtliche peripheren Halteflächenabschnitte 43a sind in einer gemeinsamen Zylindermantelfläche koaxial zur Längsachse L angeordnet, wenn die Haltekörperteile 54 kräftefrei und nicht aus ihrer jeweiligen Ruhelage ausgelenkt sind.

Über die Halteflächenabschnitte 42a, 43a wird das Werkstück 24 an seinem Randbereich an mehreren und beispielsgemäß drei oder vier Umfangsstellen in Umfangsrichtung U abgestützt. Dabei liegen die axialen Halteflächenabschnitte 42a im Randbereich der unteren Werkstückoberfläche 24b an und die peripheren Halteflächenabschnitte 43a liegen an einem Umfangsrand oder an einer Umfangsfläche des Werkstücks 24 an. Bevorzugt liegt das Werkstück 24 lose, nur durch seine eigene Gewichtskraft am Haltekörper 39 an bzw. auf den axialen Halteflächenabschnitten 42a auf. Alternativ kann über die peripheren Halteflächenabschnitte 43a durch elastisches Auslenken der Haltekörperteile 54 von der Längsachse L weg eine Klemmkraft auf das Werkstück 24 ausgeübt werden. Die Klemmkraft kann dabei gering sein, da bei einer berührungslosen Messung keine Messkräfte auf das Werkstück 24 einwirken und bei einer taktilen Messung die Messkräfte äußerst gering sind, insbesondere kleiner als 5 mN.

Beim bevorzugten Ausführungsbeispiel wird das Werkstück 24 an der ersten Werkstückoberfläche 24a nicht übergriffen, so dass die erste Werkstückoberfläche 24a vollständig frei ist und nicht durch Teile der Werkstückhalterung 35 übergriffen wird.

Die dargestellten Ausführungsbeispiele des Werkstückhalters 35 sind zum Halten von runden bzw. kreisrunden Werkstücken eingerichtet. Bei einem nicht veranschaulichten Ausführungsbeispiel kann der Haltekörper 39 des Werkstückhalters 35 eine abschnittsweise prismatische Form aufweisen und zum Halten von im Querschnitt polygonalen Werkstücken 24 eingerichtet sein

Die Erfindung betrifft eine Messvorrichtung 20 und ein Verfahren zur Durchführung einer Messung unter Verwendung eines Werkstückhalters 35. Der Werkstückhalter 35 ist dazu eingerichtet, ein Werkstück 24, mit zwei entgegengesetzt angeordneten zu messenden Werkstückoberflächen 24a, 24b derart zu halten, dass beide Werkstückoberflächen 24a, 24b durch eine bewegbare Tasteinheit 26 zugänglich sind und daher in einer Aufspannung des Werkstücks 24 gemessen werden können. Hierzu weist der Werkstückträger 35 einen Träger 36 und einen Haltekörper 39 auf. Der Haltekörper 39 hat ein vom Träger 36 abgewandtes Halteende 41 mit wenigstens einer Haltefläche 42, 43, an der das Werkstück 24 gehalten wird. In dem Haltekörper 39 ist ein Freiraum 47 gebildet, der bei gehaltenem Werkstück 24 an die dem Träger zugeordnete Werkstückoberfläche 24b angrenzt und daher die Werkstückoberfläche 24b zum Messen bzw. Antasten zugänglich macht. Die Zugänglichkeit für die Tasteinheit 26 ist über einen sich schräg oder rechtwinklig zur Längsachse L des Werkstückträgers 35 erstreckenden Querkanal 49 gewährleistet.

### Bezugszeichenliste:

- 20: Messvorrichtung
- 21: Maschinenbasis

- 23: Spanneinrichtung
- 24: Werkstück
- 24a: erste Werkstückoberfläche
- 24b: zweite Werkstückoberfläche
- 25: Maschinenachsanordnung
- 26: Tasteinheit
- 27: Tastarm
- 28: freien Tastende
- 29: erstes Tastelement
- 30: zweites Tastelement

- 35: Werkstückhalter
- 36: Träger
- 37: Einspanndorn
- 38: Trägerplatte
- 39: Haltekörper
- 40: Befestigungsende
- 41: Halteende
- 42: axiale Haltefläche
- 42a: axialer Halteflächenabschnitt
- 43: periphere Haltefläche
- 43a: peripherer Halteflächenabschnitt

- 47: Freiraum
- 48: Zentralbereich
- 49: Querkanal
- 50: Umfangsöffnung
- 51: Hauptabschnitt
- 52: Schlitzabschnitt
- 53: Ringteil des Haltekörpers
- 54: Haltekörperteil
- 54a: Längssteg des Haltekörperteils
- 54b: Quersteg des Haltekörperteils

- B: Bewegungsrichtung
- d: Versatz
- K1: erste Kurve
- K2: zweite Kurve
- L: Längsachse
- O1: erste optische Achse
- O2: zweite optische Achse
- Oi: optische Achsen eines Linsenarrays
- rS: rotatorischer Freiheitsgrad um die Schwenkachse
- S: Schwenkachse
- Tx: translatorischer Freiheitsgrad in x-Richtung
- Ty: translatorischer Freiheitsgrad in y-Richtung
- Tz: translatorischer Freiheitsgrad in z-Richtung
- U: Umfangsrichtung
- x: x-Richtung
- y: y-Richtung
- z: z-Richtung

## Patentansprüche

1. Messvorrichtung (20) aufweisend:
- einen Werkstückhalter (35),
- eine in eine Bewegungsrichtung (B) bewegbare Tasteinheit (26), wobei die Tasteinheit (26) einen Tastarm (27) aufweist, der an seinem freien Tastende (28) ein rechtwinkelig vom Tastarm (27) ausgerichtetes erstes Tastelement (29) und ein entgegengesetzt zum ersten Tastelement (29) ausgerichtetes zweites Tastelement (30) aufweist, und
- eine Spanneinrichtung (23), in die ein Träger (36) des Werkstückhalters (35) eingespannt ist, **dadurch gekennzeichnet, dass** der Werkstückhalter (35) dazu eingerichtet ist, ein Werkstück (24) mit zwei auf entgegengesetzten Werkstückseiten vorhandenen zu messenden Werkstückoberflächen (24a, 24b) während einer Messung mit der entlang einer Werkstückoberfläche (24a, 24b) bewegbaren Tasteinheit (26) zu halten, und dass der Werkstückhalter (35) aufweist:
den Träger (36), der dazu eingerichtet ist, mit der Spanneinrichtung (23) der Messvorrichtung (20) verbunden zu werden,
einen Haltekörper (39), der mit einem Befestigungsende (40) am Träger (36) befestigt ist und sich vom Träger (36) zu einem freien Halteende (41) erstreckt, das in Richtung einer Längsachse (L) des Werkstückhalters (35) mit Abstand zum Befestigungsende (40) angeordnet ist, wobei am Halteende (41) wenigstens eine Haltefläche (42, 43) vorhanden ist, die zur Anlage an einem Randbereich des Werkstücks (24) eingerichtet ist,
wobei im Haltekörper (39) ein Freiraum (47) vorhanden ist, durch den sich die Längsachse (L) erstreckt und der wenigstens einen Querkanal (49) mit einer Umfangsöffnung (50) aufweist, durch den der Freiraum (47) radial zur Längsachse (L) von außen zugänglich ist, und wobei die Umfangsöffnung (50) und der Querkanal (49) dazu eingerichtet sind, dass die Tasteinheit (26)
durch die Umfangsöffnung (50) und über den Querkanal (49) im Freiraum (47) angeordnet und dort bewegt werden kann.

2. Messvorrichtung nach Anspruch 1,
**dadurch gekennzeichnet, dass** der Freiraum (47) des Werkstückhalters (35) mehrere Querkanäle (49) mit jeweils einer Umfangsöffnung (50) aufweist, wobei die Umfangsöffnungen (50) in einer Umfangsrichtung (U) um die Längsachse (L) des Werkstückhalters (35) mit Abstand zueinander angeordnet sind.

3. Messvorrichtung nach Anspruch 2,
**dadurch gekennzeichnet, dass** die Querkanäle (49) den Haltekörper (39) des Werkstückhalters (35) in mehrere in Umfangsrichtung (U) mit Abstand angeordnete Haltekörperteile (54) trennen.

4. Messvorrichtung nach einem der vorhergehenden Ansprüche,
**dadurch gekennzeichnet, dass** der Haltekörper (39) des Werkstückhalters (35) am Halteende (40) eine axiale Haltefläche (42) aufweist, die vom Träger (36) abgewandt ist.

5. Messvorrichtung nach Anspruch 4 und nach Anspruch 3, **dadurch gekennzeichnet, dass** an jedem Haltekörperteil (54) ein axialer Halteflächenabschnitt (42a) der axialen Haltefläche (42) vorhanden ist.

6. Messvorrichtung nach Anspruch 4 oder 5,
**dadurch gekennzeichnet, dass** die axiale Haltefläche (42) oder die axialen Halteflächenabschnitte (42a) rechtwinkelig zur Längsachse (L) ausgerichtet ist bzw. sind.

7. Messvorrichtung nach einem der vorhergehenden Ansprüche,
**dadurch gekennzeichnet, dass** der Haltekörper (39) des Werkstückhalters (35) am Halteende (41) eine periphere Haltefläche (43) aufweist, die sich in einer Umfangsrichtung (U) um die Längsachse (L) erstreckt.

8. Messvorrichtung nach Anspruch 7 und nach Anspruch 4, **dadurch gekennzeichnet, dass** an jedem Haltekörperteil (54) ein peripherer Halteflächenabschnitt (43a) der peripheren Haltefläche (43) vorhanden ist.

9. Messvorrichtung nach Anspruch 7 oder 8,
**dadurch gekennzeichnet, dass** die periphere Haltefläche (43) oder die peripheren Halteflächenabschnitte (43a) der Längsachse (L) zugewandt ist bzw. sind.

10. Messvorrichtung nach Anspruch 8 und 9,
**dadurch gekennzeichnet, dass** der Werkstückhalter (35) dazu eingerichtet ist über die peripheren Halteflächenabschnitte (43a) durch elastisches Auslenken der Haltekörperteile (54) von der Längsachse (L) weg eine Klemmkraft auf das Werkstück (24) auszuüben

11. Messvorrichtung nach einem der vorhergehenden Ansprüche,
**dadurch gekennzeichnet, dass** die Tasteinheit (26) rechtwinkelig zur Längsachse (L) und rechtwinkelig zur Bewegungsrichtung (B) bewegbar oder positionierbar ist.

12. Messvorrichtung nach einem der vorhergehenden Ansprüche,
**dadurch gekennzeichnet, dass** der Tastarm (27) um eine rechtwinkelig zur Längsachse (L) und rechtwinkelig zur Bewegungsrichtung (B) ausgerichtete Schwenkachse (S) schwenkbar gelagert ist und die Schwenkbewegung messbar ist.

13. Messverfahren zum Messen eines Werkstücks (24), das zwei auf entgegengesetzten Werkstückseiten vorhandene zu messenden Werkstückoberflächen (24a, 24b) aufweist unter Verwendung einer Messvorrichtung (20) nach einem der Ansprüche 1 bis 12, mit folgenden Schritten:
- Anordnen des Werkstücks (24) am Halteende (41) des Werkstückhalters (35),
- Messen der vom Träger (36) des Werkstückhalters (35) abgewandten ersten Werkstückoberfläche (24a) durch Bewegen der Tasteinheit (26) entlang der ersten Werkstückoberfläche (24a),
- Anordnen der Tasteinheit (26) durch die Umfangsöffnung (50) und über den Querkanal (49) im Freiraum (47) und Messen der dem Träger (36) des Werkstückhalters (35) zugewandten zweiten Werkstückoberfläche (24b) durch Bewegen der Tasteinheit (26) entlang der zweiten Werkstückoberfläche (24b) im Freiraum (47) des Werkstückhalters (35).

14. Verfahren nach Anspruch 13,
**dadurch gekennzeichnet, dass** vor der Messung zunächst die Scheitelpunkte für die zu messenden Werkstückoberflächen (24a, 24b) ermittelt werden ohne das Werkstück (24) umzuspannen, wobei die Scheitelpunkte die Durchstoßpunkte der jeweiligen optischen Achse (O1, O2) durch die Werkstückoberfläche (24a, 24b) kennzeichnen.

## Claims

1. Measuring device (20) comprising:
- a workpiece holder (35),
- a probe unit (26) moveable in a moving direction (B), wherein the probe unit (26) comprises a probe arm (27) that comprises at its free probe end (28) a first probe element (29) orientated orthogonal to the probe arm (27) and a second probe element (30) orientated in opposite direction compared to the first probe element (29), and
- a clamping device (23) in which a support (36) of the workpiece holder (35)is clamped,
**characterized in that** the workpiece holder (35) is configured to hold a workpiece (24) having two workpiece surfaces (24a, 24b) to be measured at opposite workpiece sides during a measurement with the probe unit (26) that is moveable along a workpiece surface (24a, 24b), and **in that** the workpiece holder (35) comprises:
the support (36) that is configured to be connected with the clamping device (23) of the measuring device (20),
a holding body (39) that is attached with an attachment end (40) at the support (36) and that extends from the support (36) to a free holding end (41), which is arranged with a distance from the attachment end (40) in the direction of a longitudinal axis (L) of the workpiece holder (35),
wherein at the holding end (41) at least one holding surface (42, 43) is present, which is configured for contact at a peripheral region of the workpiece (24),
wherein a free space (47) through which the longitudinal axis (L) extends is present in the holding body (39) and that comprises at least one transverse channel (49) having a peripheral opening (50), through which the free space (47) is accessible radial with regard to the longitudinal axis (L) from outside,
and wherein the peripheral opening (50) and the transverse channel (49) are configured so that the probe unit (26) can be arranged through the peripheral opening (50) and via the transverse channel (49) in the free space (47) an can be moved there.

2. Measuring device according to claim 1, **characterized in that** the free space (47) comprises a plurality of transverse channels (49), each having a peripheral opening (50), wherein the peripheral openings (50) are arranged with distance to each other in a circumferential direction (U) about the longitudinal axis (L) of the workpiece holder (35).

3. Measuring device according to claim 2, **characterized in that** the transverse channels (49) separate the holding body (39) in a plurality of holding body parts (54) that are arranged with distance in circumferential direction (U).

4. Measuring device according to any of the preceding claims, **characterized in that** the holding body (39) of the workpiece holder (35) comprises an axial holding surface (42) at the holding end (40) that faces away from the support (36) .

5. Measuring device according to claim 4 and according to claim 3, **characterized in that** an axial holding surface section (42a) of the axial holding surface (42) is present at each holding body part (54).

6. Measuring device according to claim 4 or 5, **characterized in that** the axial holding surface (42) or the axial holding surface sections (42a) is or are orientated orthogonal to the longitudinal axis (L).

7. Measuring device according to any of the preceding claims, **characterized in that** the holding body (39) comprises at the holding end (41) a peripheral holding surface (43) that extends in a circumferential direction (U) around the longitudinal axis (L).

8. Measuring device according to claim 7 and according to claim 4, **characterized in that** the peripheral holding surface section (43a) of the peripheral holding surface (43) is present at each holding body part (54).

9. Measuring device according to claim 7 or 8, **characterized in that** the peripheral holding surface (43) or the peripheral holding surface sections (43a) is or are facing the longitudinal axis (L).

10. Measuring device according to claims 8 and 9, **characterized in that** the workpiece holder (35) is configured to apply a clamping force on the workpiece (24) by the peripheral holding surface sections (43a) due to elastic deflection of the holding body parts (54).

11. Measuring device according to any of the preceding claims, **characterized in that** the probe unit (26) is moveable or positionable orthogonal to the longitudinal axis (L) and orthogonal to the moving direction (B).

12. Measuring device according to any of the preceding claims, **characterized in that** the probe arm (27) is pivotably supported about a pivot axis (S) that is orientated orthogonal to the longitudinal axis (L) and orthogonal to the moving direction (B) and that the pivot movement can be measured.

13. Measuring method for measuring a workpiece (24) that comprises workpiece surfaces (24a, 24b) that are present at opposite workpiece sides by using a measuring device (20) according to any of the claims 1-12, comprising the following steps:
- arranging the workpiece (24) at the holding end (41) of the workpiece holder (35),
- measuring the first workpiece surface (24a) facing away from the support (36) of the workpiece holder (35) by moving the probe unit (26) along the first workpiece surface (24a),
- arranging the probe unit (26) in the free space (47) through the peripheral opening (50) and the transverse channel (49) and measuring the second workpiece surface (24b) facing the support (36) of the workpiece holder (35) by moving the probe unit (26) along the second workpiece surface (24b) in the free space (47) of the workpiece holder (35).

14. Method according to claim 13, **characterized in that** prior to the measurement first the apexes for the workpiece surfaces (24a, 24b) to be measured are determined without reclamping the workpiece (24), wherein the apexes characterize the puncture points of the respective optical axis (O1, O2) through the workpiece surface (24a, 24b).

## Revendications

1. Dispositif de mesure (20) comprenant :
- un porte-pièce (35),
- une unité de palpage (26) pouvant être déplacée dans une direction de déplacement (B), l'unité de palpage (26) présentant un bras de palpage (27) qui comporte, à son extrémité de palpage (28) libre, un premier élément palpeur (29), orienté à angle droit par rapport au bras de palpage (27), et un deuxième élément palpeur (30) orienté dans le sens opposé au premier élément palpeur (29), et
- un dispositif de serrage (23) dans lequel est serré un support (36) du porte-pièce (35),
**caractérisé en ce que** le porte-pièce (35) est conçu pour tenir une pièce (24) comprenant deux surfaces de pièce (24a, 24b) situées sur des faces opposées de la pièce et devant être mesurées pendant une mesure avec l'unité de palpage (26) qui peut être déplacée le long d'une surface de pièce (24a, 24b), et **en ce que** le porte-pièce (35) présente :
le support (36) qui est conçu pour être relié au dispositif de serrage (23) du dispositif de mesure (20),
un corps de support (39) qui est fixé au support (36) par une extrémité de fixation (40) et s'étend depuis le support (36) jusqu'à une extrémité de support (41) libre qui est disposée à distance de l'extrémité de fixation (40), dans le sens d'un axe longitudinal (L) du porte-pièce (35),
l'extrémité de support (41) comportant au moins une surface de support (42, 43) qui est conçue pour un appui contre une zone de bord de la pièce (24),
un espace libre (47) étant prévu dans le corps de support (39), à travers lequel s'étend l'axe longitudinal (L) et qui présente au moins un canal transversal (49) avec une ouverture périphérique (50), à travers lequel l'espace libre (47) est accessible de l'extérieur, radialement par rapport à l'axe longitudinal (L),
et l'ouverture périphérique (50) et le canal transversal (49) étant conçus pour que l'unité de palpage (26) puisse être mise en place dans l'espace libre (47), en passant par l'ouverture périphérique (50) et par le canal transversal (49), et y être déplacée.

2. Dispositif de mesure selon la revendication 1, **caractérisé en ce que** l'espace libre (47) du porte-pièce (35) présente plusieurs canaux transversaux (49) comportant chacun une ouverture périphérique (50), les ouvertures périphériques (50) étant disposées à distance les unes des autres dans une direction périphérique (U) autour de l'axe longitudinal (L) du porte-pièce (35).

3. Dispositif de mesure selon la revendication 2, **caractérisé en ce que** les canaux transversaux (49) séparent le corps de support (39) du porte-pièce (35) en plusieurs parties de corps de support (54) disposées à distance dans la direction périphérique (U).

4. Dispositif de mesure selon l'une des revendications précédentes, **caractérisé en ce que** le corps de support (39) du porte-pièce (35) présente, à l'extrémité de support (40), une surface de support (42) axiale qui est détournée du support (36).

5. Dispositif de mesure selon la revendication 4 et selon la revendication 3, **caractérisé en ce que** sur chaque partie de corps de support (54), il est prévu une portion de surface de support (42a) axiale de la surface de support (42) axiale.

6. Dispositif de mesure selon la revendication 4 ou 5, **caractérisé en ce que** la surface de support (42) axiale ou les portions de surface de support (42a) axiales est/sont orientée(s) à angle droit par rapport à l'axe longitudinal (L).

7. Dispositif de mesure selon l'une des revendications précédentes, **caractérisé en ce que** le corps de support (39) du porte-pièce (35) présente, à l'extrémité de support (41), une surface de support (43) périphérique qui s'étend dans une direction périphérique (U) autour de l'axe longitudinal (L).

8. Dispositif de mesure selon la revendication 7 et selon la revendication 4, **caractérisé en ce que** sur chaque partie de corps de support (54), il est prévu une portion de surface de support (43a) périphérique de la surface de support (43) périphérique.

9. Dispositif de mesure selon la revendication 7 ou 8, **caractérisé en ce que** la surface de support (43) périphérique ou les portions de surface de support (43a) périphériques est/sont tournée(s) vers l'axe longitudinal (L).

10. Dispositif de mesure selon les revendications 8 et 9, **caractérisé en ce que** le porte-pièce (35) est conçu pour exercer une force de serrage sur la pièce (24), par l'intermédiaire des portions de surface de support (43a) périphériques, par déviation élastique des parties de corps de support (54) dans la direction opposée à l'axe longitudinal (L).

11. Dispositif de mesure selon l'une des revendications précédentes, **caractérisé en ce que** l'unité de palpage (26) peut être déplacée ou positionnée à angle droit par rapport à l'axe longitudinal (L) et à angle droit par rapport à la direction de déplacement (B).

12. Dispositif de mesure selon l'une des revendications précédentes, **caractérisé en ce que** le bras de palpage (27) est monté avec possibilité de pivotement autour d'un axe de pivotement (S) orienté à angle droit par rapport à l'axe longitudinal (L) et à angle droit par rapport à la direction de déplacement (B), et le mouvement de pivotement peut être mesuré.

13. Procédé de mesure destiné à mesurer une pièce (24) qui présente deux surfaces de pièce (24a, 24b) situées sur des faces opposées de la pièce et devant être mesurées, en utilisant un dispositif de mesure (20) selon l'une des revendications 1 à 12, comprenant les étapes suivantes :
- mise en place de la pièce (24) à l'extrémité de support (41) du porte-pièce (35),
- mesure de la première surface de pièce (24a) détournée du support (36) du porte-pièce (35), par déplacement de l'unité de palpage (26) le long de la première surface de pièce (24a),
- mise en place de l'unité de palpage (26) dans l'espace libre (47), en passant par l'ouverture périphérique (50) et par le canal transversal (49), et mesure de la deuxième surface de pièce (24b) tournée vers le support (36) du porte-pièce (35), par déplacement de l'unité de palpage (26) le long de la deuxième surface de pièce (24b), dans l'espace libre (47) du porte-pièce (35).

14. Procédé selon la revendication 13, **caractérisé en ce que**, avant la mesure, on détermine d'abord les sommets pour les surfaces de pièce (24a, 24b) à mesurer, sans modifier le serrage de la pièce (24), les sommets caractérisant les points de percée de l'axe optique (01, 02) respectif à travers la surface de pièce (24a, 24b).
